(19) **Europäisches Patentamt / European Patent Office / Office européen des brevets**

(11) **EP 4 387 144 A1**

(12) **EUROPEAN PATENT APPLICATION**
published in accordance with Art. 153(4) EPC

(43) Date of publication:
**19.06.2024 Bulletin 2024/25**

(21) Application number: **22855414.3**

(22) Date of filing: **09.08.2022**

(51) International Patent Classification (IPC):
**H04L 5/00** $^{(2006.01)}$     **H04L 27/26** $^{(2006.01)}$

(52) Cooperative Patent Classification (CPC):
**H04L 5/00; H04L 27/00; H04L 27/26**

(86) International application number:
**PCT/CN2022/111031**

(87) International publication number:
**WO 2023/016433 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.08.2021 CN 202110932604**

(71) Applicant: **ZTE Corporation**
**Shenzhen, Guangdong 518057 (CN)**

(72) Inventors:
• HUA, Jian
**Shenzhen, Guangdong 518057 (CN)**
• XIN, Yu
**Shenzhen, Guangdong 518057 (CN)**
• BAO, Tong
**Shenzhen, Guangdong 518057 (CN)**

(74) Representative: **Regimbeau**
**20, rue de Chazelles**
**75847 Paris Cedex 17 (FR)**

(54) **REFERENCE SIGNAL CONFIGURATION METHOD AND DEVICE, AND STORAGE MEDIUM**

(57)    Provided are a reference signal configuration method and device, and a storage medium. The method includes that: a modulation mode of a data sequence is determined; a modulation mode of a reference signal sequence is determined according to the modulation mode of the data sequence, where a constellation diagram of the reference signal sequence is associated with a time domain position.

Determine a modulation mode of a data sequence    S110

Determine a modulation mode of a reference signal sequence according to the modulation mode of the data sequence    S120

**FIG. 1**

EP 4 387 144 A1

**Description**

TECHNICAL FIELD

The present application relates to the field of communications, for example, to a reference signal configuration method and device, and a storage medium.

BACKGROUND

In a high-frequency communication scene, the phase noise becomes relatively large, and in order to improve the estimation accuracy of the phase noise, a phase tracking reference signal (PTRS) scheme is optimally designed. While the PTRS may bring the estimation gain of the phase noise, for different data modulation modes, the design of the PTRS also needs to consider the peak to average power ratio (PAPR) performance.

SUMMARY

An embodiment of the present application provides a reference signal configuration method and device, and a storage medium, so that the PAPR can be reduced.

An embodiment of the present application provides a reference signal sequence configuration method. The method includes that: a modulation mode of a data sequence is determined; and a modulation mode of a reference signal sequence is determined according to the modulation mode of the data sequence, where a constellation diagram of the reference signal sequence is associated with a time domain position.

An embodiment of the present application provides a reference signal sequence configuration apparatus. The reference signal sequence configuration apparatus includes a first determination module and a second determination module. The first determination module is configured to determine a modulation mode of a data sequence. The second determination module is configured to determine a modulation mode of a reference signal sequence according to the modulation mode of the data sequence, where a constellation diagram of the reference signal sequence is associated with a time domain position

An embodiment of the present application provides a reference signal configuration device. The reference signal configuration device includes a communication module, a memory, and one or more processors. The communication module is configured to perform a communication interaction between a transmitting end and a receiving end. The memory is configured to store one or more programs. The one or more programs, when executed by the one or more processors, cause the one or more processors to implement the method of any of the embodiments described above. An embodiment of the present application provides a storage medium. The storage medium stores a computer program. The computer program, when executed by a processor, implements the method of any of the embodiments described above.

BRIEF DESCRIPTION OF DRAWINGS

FIG. 1 is a flowchart of a reference signal sequence configuration method according to an embodiment of the present application;
FIG. 2 is a schematic diagram of configuring a PTRS sequence in a time domain according to an embodiment of the present application;
FIG. 3 is another schematic diagram of configuring a PTRS sequence in a time domain according to an embodiment of the present application;
FIG. 4 is yet another schematic diagram of configuring a PTRS sequence in a time domain according to an embodiment of the present application;
FIG. 5 is still another schematic diagram of configuring a PTRS sequence in a time domain according to an embodiment of the present application;
FIG. 6 is still another schematic diagram of configuring a PTRS sequence in a time domain according to an embodiment of the present application;
FIG. 7 is still another schematic diagram of configuring a PTRS sequence in a time domain according to an embodiment of the present application;
FIG. 8 is still another schematic diagram of configuring a PTRS sequence in a time domain according to an embodiment of the present application;
FIG. 9 is a structural block diagram of a reference signal configuration apparatus according to an embodiment of the present application; and
FIG. 10 is a schematic structural diagram of a reference signal configuration device according to an embodiment of the present application.

DETAILED DESCRIPTION

Hereinafter, embodiments of the present application will be described in conjunction with the accompanying drawings. The present application is described below in conjunction with the accompanying drawings in the embodiments, and the instances listed are only intended to explain the present application, but not to limit the scope of the present application.

In a high-frequency communication scene, the phase noise is relatively large, and even if a receiving end is subjected to the conventional common phase error (CPE) phase compensation, a lot of phase noise remains. Moreover, in the high-frequency communication scene, a Doppler frequency shift is relatively large, and even if the receiving end is subjected to the frequency offset compensation, some phase deviations remain in the data symbols. In particular, for some low-level terminals, since the devices are low in cost and poor in performance, the phase noise will be larger. In addition, in the high-frequency communication scene, the path loss and the shadow attenuation are relatively large, so that the signal-to-noise ratio of some regions at the edge of the cell is very low. Moreover, the efficiency of a power amplifier (PA) at a high frequency is relatively low, and in order to improve the signal-to-noise ratio and also to save the power consumption of a battery of a user device (UE), the PAPR of a signal transmitted by the UE needs to be reduced. In a 5G new radio (NR), in order to send a signal with a lower PAPR, a discrete Fourier transform-spread orthogonal frequency division multiplexing (DFT-S OFDM) waveform is usually selected, and since data of the waveform is mapped in a time domain, so that the PAPR is lower than a cyclic prefix orthogonal frequency-division multiplexing (CP-OFDM). The PTRS of a single carrier in the NR protocol is configured in a manner of uniformly inserting packets, and the configuration manner is single and has the defects of low spectrum utilization rate, and influence on the PAPR performance and the like.

How to configure a new reference signal is a technical problem to be solved urgently aiming at a situation that the system spectrum efficiency is not affected and meanwhile the PAPR is reduced and the phase noise is suppressed.

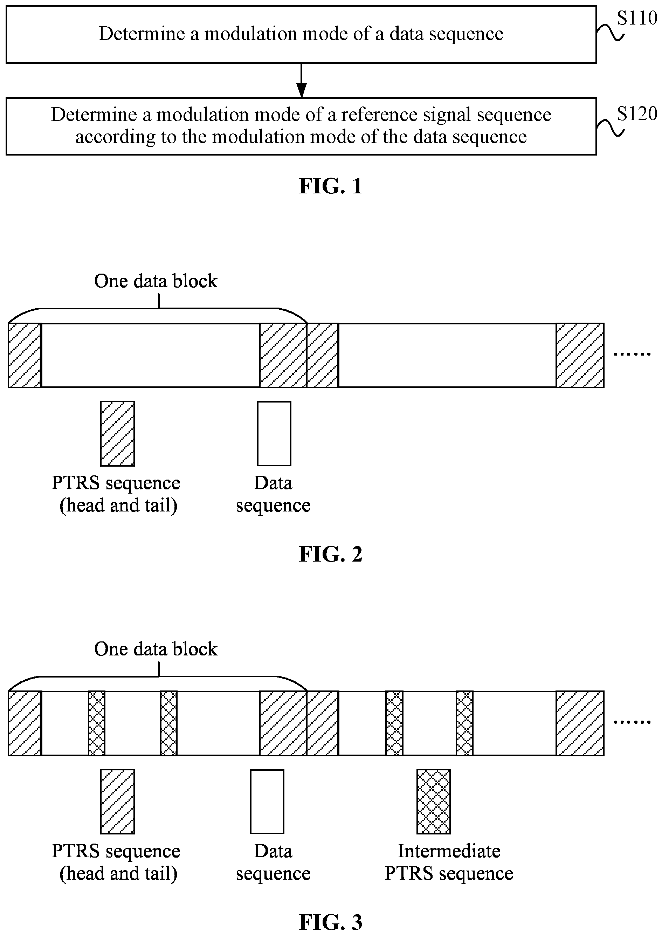

In an embodiment, FIG. 1 is a flowchart of a reference signal sequence configuration method according to an embodiment of the present application. This embodiment may be performed by a reference signal sequence configuration device. The reference signal sequence configuration device may be a terminal side device (such as, a user device) or a network side device (such as, a base station). As shown in FIG. 1, this embodiment includes S 110 to S120.

In S 110, a modulation mode of a data sequence is determined.

In S 120, a modulation mode of a reference signal sequence is determined according to the modulation mode of the data sequence.

A constellation diagram of the reference signal sequence is associated with a time domain position. In this embodiment, a reference signal sequence is configured in a time domain, and the modulation mode of the reference signal sequence is determined according to the modulation mode of the data sequence in a same data block where the reference signal sequence is located. After the modulation mode of the reference signal sequence is determined, the reference signal sequence is modulated according to the modulation mode to obtain a corresponding reference signal sequence. Then modulation symbols in the reference signal sequence are adjusted according to the time domain position of the reference signal sequence in the data block, so that the modulation symbols satisfy the characteristics of the modulation mode. For example, modulation symbols whose position is at an odd number within the data block are in a two quadrant and a four quadrant of the constellation diagram, and modulation symbols whose position is at an even number within the data block are in an one quadrant and a three quadrant of the constellation diagram. In an actual operation process, the modulation mode of the data sequence may be determined according to the channel environment and the transmitting rate where the data block is located, which is not limited herein.

In an embodiment, the operation of determining modulation mode of the reference signal sequence according to the modulation mode of the data sequence includes one of: the modulation mode of the reference signal sequence being the same as the modulation mode of the data sequence; or the modulation mode of the reference signal sequence being different from the modulation mode of the data sequence. In an embodiment, the reference signal sequence may be the same as the modulation mode of the data sequence in a same data block, or may be different from the modulation mode of the data sequence in a same data block. In an embodiment, the modulation mode of the data sequence may include one of: a $\pi/2$ binary phase shift keying (BPSK) modulation mode, a $\pi/4$ BPSK modulation mode, a 1+D $\pi/2$ BPSK modulation mode, a quadrature phase shift keying (QPSK) modulation mode, a 8 phase shift keying (PSK) modulation mode, a 16 quadrature amplitude modulation (QAM) modulation mode, a 16 amplitude phase shift keying (APSK) modulation mode, a 64QAM modulation mode, or a 256QAM modulation mode. Accordingly, the modulation mode of the reference signal sequence may include one of a $\pi/2$ BPSK modulation mode, a $\pi/4$ BPSK modulation mode, a 1+D $\pi/2$ BPSK modulation mode, a QPSK modulation mode, a 8PSK modulation mode, a 16 QAM modulation mode, a 16 APSK modulation mode, a 64QAM modulation mode, or a 256QAM modulation mode. Exemplarily, when the modulation mode of the data sequence is $\pi/2$ BPSK, the modulation mode of the reference signal sequence may be $\pi/2$ BPSK.

In an embodiment, the time domain position includes one of a time domain position before oversampling or a time domain position before upsampling.

In an embodiment, one data block includes the reference signal sequence and the data sequence, and the data block satisfies a modulation rule of the data sequence. In an embodiment, within one data block, a reference signal sequence A and a data sequence B may together form an overall sequence C, and the sequence C satisfies a modulation rule of the data sequence B.

In an embodiment, in one data block consisting of the reference signal sequence, the modulation mode of the reference signal sequence is the same as a modulation mode of a data sequence in a data block adjacent to the one data block. In an embodiment, in one data block consisting of all reference signal sequences, the modulation mode of the reference signal sequence A is the same as a modulation mode of a data sequence in a data block adj acent to the one data block. Exemplarily, in a case where the reference signal sequence is an PTRS sequence, only the reference signal sequence is included in one data block, and the modulation mode of the reference signal sequence is the same as a modulation mode of a data sequence in another adjacent data block, thereby avoiding that the PAPR performance of a data sequence originally having the lower PAPR becomes worse since a modulation mode of the PTRS sequence is different form the modulation mode of the data sequence or the overall sequence does not satisfy the modulation requirements.

In an embodiment, each data block includes head reference signal sequences and tail reference signal sequences. The head reference signal sequences within each data block are the same, and the tail reference signal sequences within each data block are the same. In an embodiment, the reference signal sequence in each data block is divided into two head-to-tail consecutive reference signal sequences, i.e., the head reference signal sequence and the tail reference signal sequence, and the head reference signal sequences in each data block are the same and the tail reference signal sequences in each data block are the same, that is, the head reference signal sequence within each data block is the same as the head reference signal sequence in another data block, and the tail reference signal sequence in each data block is the same as the tail reference signal sequence in another data block. Moreover, modulation symbols whose position is at an odd number of the reference signal sequence within each data block are located in a second quadrant and a fourth quadrant of the constellation diagram, and modulation symbols whose position is at an even number of the reference signal sequence within each data block are located in a first quadrant and a third quadrant of the constellation diagram. Exemplarily, when the reference signal sequence is a PTRS sequence, the configuration of the PTRS sequence may be associated with a time domain position within a symbol so that the PAPR performance numbering within one OFDM symbol and head-to-tail PTRS sequence may replace the role of cyclic prefix (CP).

In an embodiment, each data block includes intermediate reference signal sequences discretely distributed, and each intermediate reference signal sequence is the same or different. In an embodiment, in a data block including the intermediate reference signal sequences discretely distributed, modulation symbols whose position is at an odd number of the reference signal sequence within each data block may be located in the second quadrant and the fourth quadrant of the constellation diagram, and modulation symbols whose position is at an even number of the reference signal sequence within each data block may be located in the first quadrant and the third quadrant of the constellation diagram.

In an embodiment, each data block includes head reference signal sequences, tail reference signal sequences, and intermediate reference signal sequence discretely distributed. The head reference signal sequences in each data block are the same, the tail reference signal sequences in each data block are the same, and each intermediate reference signal sequence is the same or different. In an embodiment, in a data block including the head reference signal sequences, the tail reference signal sequences, and the intermediate reference signal sequence discretely distributed, the head reference signal sequences in each data block are the same and the tail reference signal sequences in each data block are the same, that is, the head reference signal sequences in one data block are the same as the head reference signal sequences in another data block, and the tail reference signal sequences in one data block are the same as the tail reference signal sequences in another data block, where the intermediate reference signal sequence in each data block may be the same or different. Modulation symbols whose position is at an odd number of the reference signal sequence (such as, the head reference signal sequence, the tail reference signal sequence and the intermediate reference signal sequence discretely distributed) within each data block are located in the second quadrant and the fourth quadrant of the constellation diagram, and modulation symbols whose position is at an even number of the reference signal sequence (such as, the head reference signal sequence, the tail reference signal sequence and the intermediate reference signal sequence discretely distributed) within each data block are located in the first quadrant and the third quadrant of the constellation diagram

In an embodiment, a process of obtaining the $\pi/4$ BPSK modulation mode includes: an interpolation operation is performed between two adjacent modulation symbols on the basis of the $\pi/2$ BPSK modulation mode, where a phase of an interpolation is a mean value of phases of the two adjacent modulation symbols, and a modulus of the interpolation is the same as a modulus of $\pi/2$ BPSK modulation symbols.

In an embodiment, assuming that the modulation mode of the data sequence is $\pi/4$ BPSK, the modulation mode of the reference signal sequence may also be $\pi/4$ BPSK. In an embodiment, each data block includes two head-to-tail consecutive reference signal sequences (i.e., the head reference signal sequence and the tail reference signal sequence), the head reference signal sequences in each data block are the same, and the tail reference signal sequences in each data block are the same. The reference signal sequence and the data sequence are modulated together into $\pi/2$ BPSK, moreover, modulation symbols whose position is at an odd number of the reference signal sequence within each data block are located in a second quadrant and a fourth quadrant of the constellation diagram, and modulation symbols whose position is at an even number of the reference signal sequence within each data block are located in a first quadrant and a third quadrant of the constellation diagram, and then the data block of $\pi/2$ BPSK is interpolated to obtain $\pi/4$ BPSK.

In an embodiment, assuming that the modulation mode of the data sequence is π/4 BPSK, the modulation mode of the reference signal sequence may also be π/4 BPSK. In an embodiment, each data block includes intermediate reference signal sequences discretely distributed, where each intermediate reference signal sequence is the same or different. The reference signal sequence and the data sequence are modulated together into π/2 BPSK, and modulation symbols whose position is at an odd number of the reference signal sequence within each data block are located in a second quadrant and a fourth quadrant of the constellation diagram, and modulation symbols whose position is at an even number of the reference signal sequence within each data block are located in a first quadrant and a third quadrant of the constellation diagram, and then the data block of π/2 BPSK is interpolated to obtain π/4 BPSK.

In an embodiment, assuming that the modulation mode of the data sequence is π/4 BPSK, the modulation mode of the reference signal sequence may also be π/4 BPSK. In an embodiment, each data block includes head reference signal sequences, tail reference signal sequences, and intermediate reference signal sequences discretely distributed, where the head reference signal sequences in each data block are the same, the tail reference signal sequences in each data block are the same, and each intermediate reference signal sequence is the same or different. The reference signal sequence and the data sequence are modulated together into π/2 BPSK, and modulation symbols whose position is at an odd number of the reference signal sequence within each data block are located in a second quadrant and a fourth quadrant of the constellation diagram, and modulation symbols whose position is at an even number of the reference signal sequence within each data block are located in a first quadrant and a third quadrant of the constellation diagram, and then the data block of π/2 BPSK is interpolated to obtain π/4 BPSK.

In an embodiment, a last interpolation of each data block is an interpolation result of a first symbol and a last symbol in the π/2 BPSK modulation symbols before the interpolation.

In an embodiment, the 1+D π/2 BPSK modulation mode includes: a convolution operation is performed on time domain data and $[\sqrt{2}, \sqrt{2}]$ on the basis of the π/2 BPSK modulation mode to obtain the 1+D π/2 BPSK modulation mode. In an embodiment, for the modulation mode obtained by the more complex transformation of 1+D π/2 BPSK, the PTRS sequence is configured from π/2 BPSK, and the PTRS sequence and the data sequence jointly form a regular π/2 BPSK modulation mode, so that the PRPR is lower, and the subsequent processing is facilitated.

In an embodiment, assuming that the modulation mode of the data sequence is 1+D π/2 BPSK, the modulation mode of the reference signal sequence is also 1+D π/2 BPSK. In an embodiment, each data block includes two head-to-tail consecutive reference signal sequences (i.e., the head reference signal sequence and the tail reference signal sequence), the head reference signal sequences in each data block are the same, and the tail reference signal sequences in each data block are the same. The reference signal sequence and the data sequence are formulated together into π/2 BPSK, and modulation symbols whose position is at an odd number of the reference signal sequence within each data block are located in a second quadrant and a fourth quadrant of the constellation diagram, and modulation symbols whose position is at an even number of the reference signal sequence within each data block are located in a first quadrant and a third quadrant of the constellation diagram, and then the data block of π/2 BPSK is subjected to a convolution operation to obtain 1+D π/2 BPSK. In an embodiment, the convolution operation within each data block includes a circular convolution operation.

In an embodiment, assuming that the modulation mode of the data sequence is 1+D π/2 BPSK, the modulation mode of the reference signal sequence is also 1+D π/2 BPSK. In an embodiment, each data block includes intermediate reference signal sequences discretely distributed, where each intermediate reference signal sequence is the same or different. The reference signal sequence and the data sequence are modulated together into π/2 BPSK, modulation symbols whose position is at an odd number of the reference signal sequence within each data block are located in a second quadrant and a fourth quadrant of the constellation diagram, and modulation symbols whose position is at an even number of the reference signal sequence within each data block are located in a first quadrant and a third quadrant of the constellation diagram, and then the data block of π/2 BPSK is subjected to a convolution operation to obtain 1+D π/2 BPSK. In an embodiment, the convolution operation within each data block includes a circular convolution operation.

In an embodiment, assuming that the modulation mode of the data sequence is 1+D π/2 BPSK, the modulation mode of the reference signal sequence is also 1+D π/2 BPSK. In an embodiment, each data block includes head reference signal sequences, tail reference signal sequences, and intermediate reference signal sequences discretely distributed, where the head reference signal sequences in each data block re the same, the tail reference signal sequences are the same, and each intermediate reference signal sequence is the same or different. The reference signal sequence and the data sequence are modulated together into π/2 BPSK, and modulation symbols whose position is at an odd number of the reference signal sequence within each data block are located in a second quadrant and a fourth quadrant of the constellation diagram, and modulation symbols whose position is at an even number of the reference signal sequence within each data block are located in a first quadrant and a third quadrant of the constellation diagram, and then the data block of $\pi/2$ BPSK is subjected to a convolution operation to obtain 1+D $\pi/2$ BPSK. In an embodiment, the convolution operation within each data block includes a circular convolution operation.

In an embodiment, the 1+D $\pi/4$ BPSK modulation mode includes: a convolution operation is performed on time domain data and $[\sqrt{2}, \ \sqrt{2}]$ on the basis of the $\pi/4$ BPSK modulation mode to obtain the 1+D $\pi/4$ BPSK modulation mode. In an embodiment, for the modulation mode obtained by the more complex transformation of 1+D $\pi/4$ BPSK, the PTRS sequence is configured from $\pi/2$ BPSK, and the PTRS sequence and the data sequence jointly form a regular $\pi/4$ BPSK modulation mode, so that the PRPR is lower, and the subsequent processing is facilitated.

In an embodiment, assuming that the modulation mode of the data sequence is 1+D $\pi/4$ BPSK, the modulation mode of the reference signal sequence is also 1+D $\pi/4$ BPSK. In an embodiment, each data block includes two head-to-tail consecutive reference signal sequences (i.e., the head reference signal sequence and the tail reference signal sequence), the head reference signal sequences in each data block are the same, and the tail reference signal sequences in each data block are the same. The reference signal sequence and the data sequence are formulated together into $\pi/2$ BPSK, and modulation symbols whose position is at an odd number of the reference signal sequence within each data block are located in a second quadrant and a fourth quadrant of the constellation diagram, and modulation symbols whose position is at an even number of the reference signal sequence within each data block are located in a first quadrant and a third quadrant of the constellation diagram, and then the data block of $\pi/2$ BPSK is interpolated to obtain $\pi/4$ BPSK, the data block of $\pi/4$ BPSK is subjected to a convolution operation to obtain 1+D $\pi/4$ BPSK. In an embodiment, a last interpolation of each data block is an interpolation result of a first symbol and a last symbol in the $\pi/2$ BPSK modulation symbols before the interpolation. In an embodiment, the convolution operation within each data block includes a circular convolution operation.

In an embodiment, assuming that the modulation mode of the data sequence is 1+D $\pi/4$ BPSK, the modulation mode of the reference signal sequence is also 1+D $\pi/4$ BPSK. In an embodiment, each data block includes intermediate reference signal sequences discretely distributed, where each intermediate reference signal sequence is the same or different. The reference signal sequence and the data sequence are modulated together into $\pi/2$ BPSK, and modulation symbols whose position is at an odd number of the reference signal sequence within each data block are located in a second quadrant and a fourth quadrant of the constellation diagram, and modulation symbols whose position is at an even number of the reference signal sequence within each data block are located in a first quadrant and a third quadrant of the constellation diagram, and then the data block of $\pi/2$ BPSK is interpolated to obtain $\pi/4$ BPSK, the data block of $\pi/4$ BPSK is subjected to a convolution operation to obtain 1+D $\pi/4$ BPSK. In an embodiment, a last interpolation of each data block is an interpolation result of a first symbol and a last symbol in the $\pi/2$ BPSK modulation symbols before the interpolation. In an embodiment, the convolution operation within each data block includes a circular convolution operation.

In an embodiment, assuming that the modulation mode of the data sequence is 1+D $\pi/4$ BPSK, the modulation mode of the reference signal sequence is also 1+D $\pi/4$ BPSK. In an embodiment, each data block includes head reference signal sequences, tail reference signal sequences, and intermediate reference signal sequences discretely distributed, where the head reference signal sequences in each data block are the same, the tail reference signal sequences in each data block are the same, and each intermediate reference signal sequence is the same or different. The reference signal sequence and the data sequence are modulated together into $\pi/2$ BPSK, and modulation symbols whose position is at an odd number of the reference signal sequence within each data block are located in a second quadrant and a fourth quadrant of the constellation diagram, and modulation symbols whose position is at an even number of the reference signal sequence within each data block are located in a first quadrant and a third quadrant of the constellation diagram, and then the data block of $\pi/2$ BPSK is interpolated to obtain $\pi/4$ BPSK, the data block of $\pi/4$ BPSK is subjected to a convolution operation to obtain 1+D $\pi/4$ BPSK. In an embodiment, a last interpolation of each data block is an interpolation result of a first symbol and a last symbol in the $\pi/2$ BPSK modulation symbols before the interpolation. In an embodiment, the convolution operation within each data block includes a circular convolution operation. In an embodiment, the time domain position of the reference signal sequence within each data block satisfies the following condition: modulation symbols whose position is at an odd number of the reference signal sequence within each data block being located in a second quadrant and a fourth quadrant of the constellation diagram, and modulation symbols whose position is at an even number of the reference signal sequence within each data block being located in a first quadrant and a third quadrant of the constellation diagram; and modulation symbols whose position is at an odd number of the reference signal sequence within each slot being located in the second quadrant and the fourth quadrant of the constellation diagram, and modulation symbols whose position is at an even number of the reference signal sequence within each slot being located in the first quadrant and the third quadrant of the constellation diagram. In an embodiment, modulation symbols whose position is at an odd number of the reference signal sequence within each data block may be located in the second quadrant and the fourth quadrant of the constellation diagram, and modulation symbols whose position is at an even number of the reference signal sequence within each data block are located in the first quadrant and the third quadrant of the constellation diagram; modulation symbols whose position is at an odd number of the reference signal sequence within each slot may be located in the second quadrant and the fourth quadrant of the constellation diagram, and modulation symbols whose position is at an even number of the reference signal sequence within each slot may be located in the first quadrant and the third quadrant of the constellation diagram, so that the better PAPR performance can be ensured in a case where the length in one data block is an odd number.

In an embodiment, a process of determining the reference signal sequence in each data block includes that: a bit sequence of a reference signal is generated from a pseudo-random sequence; and a corresponding reference signal sequence is determined according to the bit sequence of the reference signal, a time domain position of the reference signal sequence in one data block, and a modulation mode of the reference signal. In an embodiment, a bit sequence of a reference signal is firstly generated from a pseudo-random sequence, then a corresponding reference signal sequence is determined according to the bit sequence of the reference signal, a time domain position of the reference signal sequence in one data block, and a modulation mode of the reference signal. That is, a corresponding modulation symbol is determined according to the bit sequence of the reference signal, the modulation mode, and the time domain position of the reference signal sequence within one data block so that modulation symbols whose position is at an odd number within data block are located in a second quadrant and a fourth quadrant of the constellation diagram, and modulation symbols whose position is at an even number within each data block are located in a first quadrant and a third quadrant of the constellation diagram, and the PAPR of the reference signal sequence is lower by presetting the bit sequence of the pseudo-random reference signal and then determining the reference signal sequence according to the modulation mode and the time domain position.

In an embodiment, the pseudo-random sequence includes one of a pseudo-noise (PN) sequence, a GOLD sequence, or an m sequence.

In an embodiment, the reference signal sequence includes one of a demodulation reference signal (DMRS) sequence, a PTRS sequence, or a sounding reference signal (SRS) sequence. In an embodiment, the reference signal sequence may also be some known sequence of guard interval (GI) sequences. In an embodiment, the reference signal sequence may also be configured in a single carrier type waveform such as DFT-s-OFDM, SC-QAM.

In an embodiment, the configuration process of the reference signal sequence will be described by using an example in which the reference signal sequence is a PTRS sequence, the modulation mode is π/2 BPSK, and one data block includes a head reference signal sequence, a tail reference signal sequence, and a data sequence. FIG. 2 is a schematic diagram of configuring the PTRS sequence in a time domain according to an embodiment of the present application. As shown in FIG. 2, the configuration scheme of the PTRS sequence is described in the time domain. Since the experienced channel is a fading channel with a certain multipath delay, and a certain phase noise exists between a sending end and a receiving end, then a segment of continuous PTRS sequences (namely, the head reference signal sequence and the tail reference signal sequence in the above-described embodiments) are respectively disposed at a head and a tail of each data block, and the data sequence is in the middle. Moreover, the configuration of other data blocks is the same over a period of time, and PTRS sequences of the head and the tail of each data block are exactly the same.

Exemplarily, assuming that the modulation mode of the data sequence is π/2 BPSK, a length of the data sequence is 98, the modulation mode of the PTRS sequence at the head and the tail is also π/2 BPSK, and lengths of the PTRS sequence at the head and the tail are 4 and 6, respectively. According to the length requirement, a group of GOLD sequences with a length of 31 is firstly generated, and portions with lengths of 4 and 6 are respectively intercepted from the GOLD sequences so as to serve as bit sequences of a head PTRS and a tail PTRS, respectively. A corresponding reference signal sequence is obtained by means of adjusting the bit sequences of the head PTRS and the tail PTRS, the π/2 BPSK modulation mode, and the time domain position of the reference signal sequence in one data block, so that modulation symbols whose position is at an odd number in the data block are in a second quadrant and a four quadrant of a constellation diagram, and modulation symbols whose position is at an even number in the data block are in a first quadrant and a third quadrant of the constellation diagram.

In an embodiment, the configuration process of the reference signal sequence will be described by using an example in which the reference signal sequence is a PTRS sequence, the modulation mode is π/2 BPSK, and one data block includes a head reference signal sequence, a tail reference signal sequence, an intermediate reference signal sequence, and a data sequence. FIG. 3 is another schematic diagram of configuring a PTRS sequence in a time domain according to an embodiment of the present application. As shown in FIG. 3, the configuration scheme of the PTRS sequence is described in the time domain. Since the experienced channel is a fading channel with a certain multipath delay, and the phase noise varying faster exists at a sending end and a receiving end, then a segment of continuous PTRS sequences (namely, the head reference signal sequence and the tail reference signal sequence in the above-described embodiments) and 2 segments of intermediate PTRS sequences (namely, the intermediate reference signal sequences discretely distributed in the above-described embodiments) exist in a head and a tail of each data block, respectively, and the rest are data sequences. Moreover, the configuration of other data blocks is the same over a period of time, and PTRS sequences of the head and the tail of each data block are exactly the same, and the intermediate PTRS sequences of each data block are exactly the same. Exemplarily, assuming that the modulation mode of the data sequence is π/2 BPSK, a length of the data sequence is 90, the modulation mode of the PTRS sequence at the head and the tail is also π/2 BPSK, lengths of the PTRS sequence at the head and the tail are 4 and 6, respectively, the modulation mode of 2 intermediate PTRS sequences is also π/2 BPSK, and lengths of the 2 intermediate PTRS sequences are both 4.

According to the length requirement, a group of GOLD sequences with a length of 31 is firstly generated, and portions with lengths of 4, 6, 4, and 4 are respectively intercepted from the GLOD sequences so as to serve as bit sequences of a head PTRS, a tail PTRS, and 2 segments of intermediate PTRS, respectively. A corresponding reference signal sequence is obtained by means of adjusting the bit sequences of the head PTRS, the tail PTRS and the 2 segments of intermediate PTRS, the π/2 BPSK modulation mode, and the time domain position of the reference signal sequence in one data block, so that modulation symbols whose position is at an odd number in the data block are located in a second quadrant and a fourth quadrant of the constellation diagram, and modulation symbols whose position is at an even number in the data block are located in a first quadrant and a third quadrant of the constellation diagram.

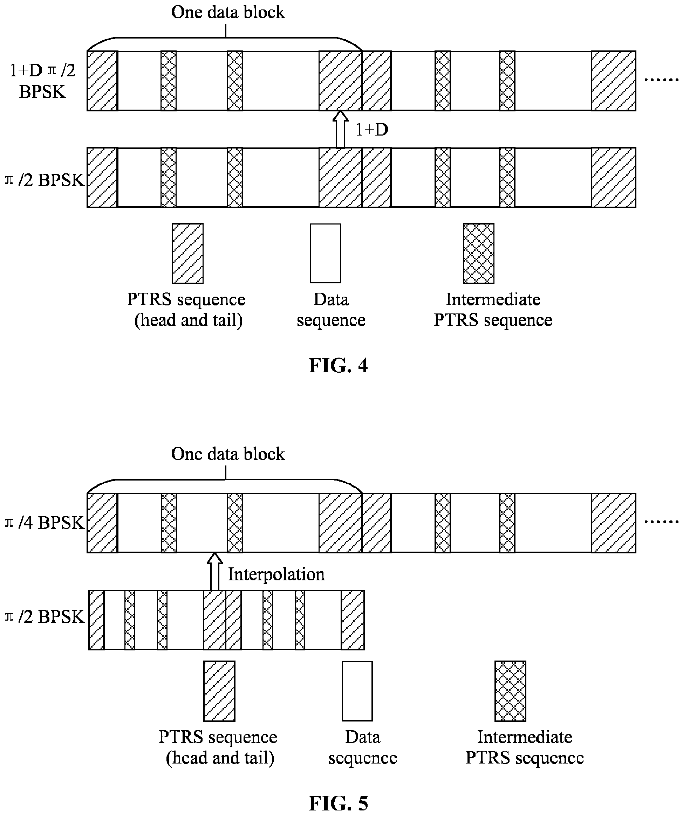

In an embodiment, the configuration process of the reference signal sequence will be described by using an example in which the reference signal sequence is a PTRS sequence, the modulation mode is 1+D π/2 BPSK, and one data block includes a head reference signal sequence, a tail reference signal sequence, an intermediate reference signal sequence, and a data sequence. FIG. 4 is yet another schematic diagram of configuring a PTRS sequence in a time domain according to an embodiment of the present application. As shown in FIG. 4, the configuration scheme of the PTRS sequence is described in the time domain. Since the experienced channel is a fading channel with a certain multipath delay, and the phase noise varying faster exists at a sending end and a receiving end, then a segment of continuous PTRS sequences (namely, the head reference signal sequence and the tail reference signal sequence in the above-described embodiments) and 2 segments of intermediate PTRS sequences (namely, the intermediate reference signal sequences distributed discretely in the above-described embodiments) exist in a head and a tail of each data block, respectively, and the rest are data sequences. Moreover, the configuration of other data blocks is the same over a period of time, and PTRS sequences of the head and the tail of each data block are exactly the same, and the intermediate PTRS sequences of each data block are the same. Exemplarily, assuming that the modulation mode of the data sequence is 1+D π/2 BPSK, a length of the data sequence is 90, the modulation mode of the PTRS sequence at the head and the tail is also 1+D π/2 BPSK, lengths of the PTRS sequence at the head and the tail are 4 and 6, respectively, the modulation mode of 2 intermediate PTRS sequences is also 1+D π/2 BPSK and lengths of the 2 intermediate PTRS sequences are both 4.

According to the length requirement, a group of GOLD sequences with a length of 31 is firstly generated, and portions with lengths of 4, 6, 4, and 4 are respectively intercepted from the GLOD sequences so as to serve as bit sequences of a head PTRS, a tail PTRS, and a 2 segments of intermediate PTRS, respectively. A corresponding reference signal sequence is obtained by means of adjusting the bit sequences of the head PTRS, the tail PTRS and the 2 segments of intermediate PTRS, the π/2 BPSK modulation mode, and the time domain position of the reference signal sequence in one data block, so that modulation symbols whose position is at an odd number in the data block are located in a second quadrant and a fourth quadrant of the constellation diagram, and modulation symbols whose position is at an even number in the data block are located in a first quadrant and a third quadrant of the constellation diagram.

Then, the π/2 BPSK sequence within the whole data block is subjected to the circular convolution operation so as to obtain 1+D π/2 BPSK.

In an embodiment, the configuration process of the reference signal sequence will be described by using an example in which the reference signal sequence is a PTRS sequence, the modulation mode is π/4 BPSK, and one data block includes a head reference signal sequence, a tail reference signal sequence, an intermediate reference signal sequence, and a data sequence. FIG. 5 is another schematic diagram of configuring a PTRS sequence in a time domain according to an embodiment of the present application. As shown in FIG. 5, the configuration scheme of the PTRS sequence is described in the time domain. Since the experienced channel is a fading channel with a certain multipath delay, and the phase noise varying faster exists at a sending end and a receiving end, then a segment of continuous PTRS sequences (namely, the head reference signal sequence and the tail reference signal sequence in the above-described embodiments) and 2 segments of intermediate PTRS sequences (namely, the intermediate reference signal sequences distributed discretely in the above-described embodiments) exist in a head and a tail of each data block, respectively, and the rest are data sequences. Moreover, the configuration of other data blocks is the same over a period of time, and PTRS sequences of the head and the tail of each data block are exactly the same, and the intermediate PTRS sequences of each data block are the same. Exemplarily, assuming that the modulation mode of the data sequence is $\pi/4$ BPSK, a length of the data sequence is 90, the modulation mode of the PTRS sequence at the head and the tail is also $\pi/4$ BPSK, lengths of the PTRS sequence at the head and the tail are 4 and 6, respectively, the modulation mode of 2 intermediate PTRS sequences is also $\pi/4$ BPSK, and lengths of the 2 intermediate PTRS sequences are both 4.

According to the length requirement, a group of GOLD sequences with a length of 31 is firstly generated, and portions with lengths of 2, 3, 2, and 2 are respectively intercepted from the GLOD sequences so as to serve as bit sequences of a head PTRS, a tail PTRS, and 2 segments of intermediate PTRS, respectively. A corresponding reference signal sequence is obtained by means of adjusting the bit sequences of the head PTRS, the tail PTRS and the 2 segments of intermediate PTRS, the $\pi/2$ BPSK modulation mode, and the time domain position of the reference signal sequence in one data block, so that modulation symbols whose position is at an odd number in the data block are located in a second quadrant and a fourth quadrant of the constellation diagram, and modulation symbols whose position is at an even number in the data block are located in a first quadrant and a third quadrant of the constellation diagram.

Then, the $\pi/2$ BPSK sequence within the whole data block is interpolated to obtain $\pi/4$ BPSK, and a result of a last interpolation of each data block is an interpolation result of the $\pi/2$ BPSK sequence of the first PTRS (i.e., the first symbol) and the last PTRS (i.e., the last symbol).

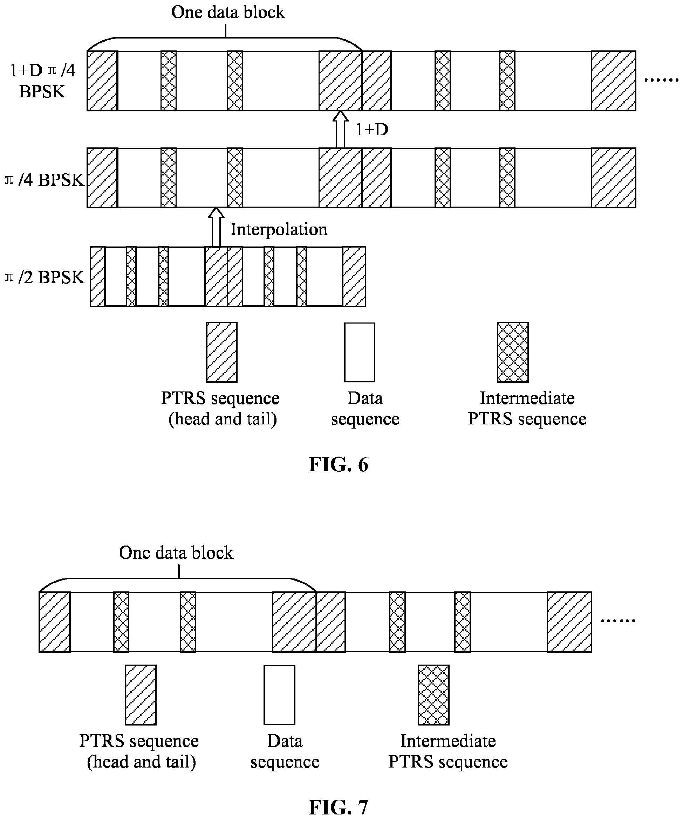

In an embodiment, the configuration process of the reference signal sequence will be described by using an example in which the reference signal sequence is a PTRS sequence, the modulation mode is 1+D $\pi/4$ BPSK, and one data block includes a head reference signal sequence, a tail reference signal sequence, an intermediate reference signal sequence, and a data sequence. FIG. 6 is still another schematic diagram of configuring a PTRS sequence in a time domain according to an embodiment of the present application. As shown in FIG. 6, the configuration scheme of the PTRS sequence is described in the time domain. Since the experienced channel is a fading channel with a certain multipath delay, and the phase noise varying faster exists at a sending end and a receiving end, then a segment of continuous PTRS sequences (namely, the head reference signal sequence and the tail reference signal sequence in the above-described embodiments) and 2 segments of intermediate PTRS sequences (namely, the intermediate reference signal sequences distributed discretely in the above-described embodiments) exist in a head and a tail of each data block, respectively, and the rest are data sequences. Moreover, the configuration of other data blocks is the same over a period of time, and PTRS sequences of the head and the tail of each data block are exactly the same, and the intermediate PTRS sequences of each data block are the same. Exemplarily, assuming that the modulation mode of the data sequence is 1+D $\pi/4$ BPSK, a length of the data sequence is 90, the modulation mode of the PTRS sequence at the head and the tail is also 1+D $\pi/4$ BPSK, lengths of the PTRS sequence at the head and the tail are 4 and 6, respectively, the modulation mode of 2 intermediate PTRS sequences is also 1+D $\pi/4$ BPSK, and lengths of the 2 intermediate PTRS sequences are both 4.

According to the length requirement, a group of GOLD sequences with a length of 31 is firstly generated, and portions with lengths of 2, 3, 2 and 2 are respectively intercepted from the GLOD sequences so as to serve as bit sequences of a head PTRS, a tail PTRS and 2 segments of intermediate PTRS, respectively. A corresponding reference signal sequence is obtained by means of adjusting the bit sequences of the head PTRS, the tail PTRS and the 2 segments of intermediate PTRS, the $\pi/2$ BPSK modulation mode, and the time domain position of the reference signal sequence in one data block, so that modulation symbols whose position is at an odd number in the data block are located in a second quadrant and a fourth quadrant of the constellation diagram, and modulation symbols whose position is at an even number in the data block are located in a first quadrant and a third quadrant of the constellation diagram.

Then, the $\pi/2$ BPSK sequence within the whole data block is interpolated to obtain $\pi/4$ BPSK, and a result of a last interpolation of each data block is an interpolation result of the $\pi/2$ BPSK sequence of the first PTRS (i.e., the first symbol) and the last PTRS (i.e., the last symbol). The $\pi/4$ BPSK sequence within the whole data block is then subjected to the circular convolution operation to obtain 1+D $\pi/4$ BPSK.

In an embodiment, the configuration process of the reference signal sequence will be described by using an example in which the reference signal sequence is a PTRS sequence, the modulation mode is QPSK, and one data block includes a head reference signal sequence, a tail reference signal sequence, an intermediate reference signal sequence, and a data sequence. FIG. 7 is another schematic diagram of configuring a PTRS sequence in a time domain according to an embodiment of the present application. As shown in FIG. 7, the configuration scheme of the PTRS sequence is described in the time domain. Since the experienced channel is a fading channel with a certain multipath delay, and the phase noise varying faster exists at a sending end and a receiving end, then a segment of continuous PTRS sequences (namely, the head reference signal sequence and the tail reference signal sequence in the above-described embodiments) and 2 segments of intermediate PTRS sequences (namely, the intermediate reference signal sequences distributed discretely in the above-described embodiments) exist in a head and a tail of each data block, respectively, and the rest are data sequences. Moreover, the configuration of other data blocks is the same over a period of time, and PTRS sequences of the head and the tail of each data block are exactly the same, and the intermediate PTRS sequences of each data block are the same. Exemplarily, assuming that the modulation mode of the data sequence is QPSK, a length of the data sequence is 90, the modulation mode of the PTRS sequence at the head and the tail is also QPSK, lengths of the PTRS sequence at the head and the tail are 4 and 6, respectively, the modulation modes of 2 intermediate PTRS sequences is also QPSK, and lengths of the 2 intermediate PTRS sequences are both 4.

According to the length requirement, a group of GOLD sequences with a length of 31 is firstly generated, and portions with lengths of 4, 6, 4, and 4 are respectively intercepted from the GLOD sequences so as to serve as bit sequences of a head PTRS, a tail PTRS and 2 segments of intermediate PTRS, respectively. A corresponding reference signal sequence is obtained by means of adjusting the bit sequences of the head PTRS, the tail PTRS and the 2 segments of intermediate PTRS, the $\pi/2$ BPSK modulation mode, and the time domain position of the reference signal sequence in one data block, so that modulation symbols whose position is at an odd number in the data block are located in a second quadrant and a fourth quadrant of the constellation diagram, and modulation symbols whose position is at an even number in the data block are located in a first quadrant and a third quadrant of the constellation diagram.

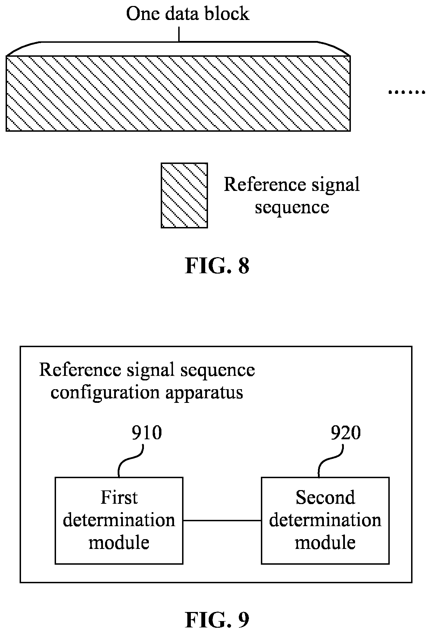

In an embodiment, the configuration process of the reference signal sequence will be described by using an example in which one data block includes the reference signal sequence and the modulation mode is BPSK. FIG. 8 is another schematic diagram of configuring a PTRS sequence in a time domain according to an embodiment of the present application. As shown in FIG. 8, the configuration scheme of the reference signal sequence is described in the time domain. Since the experienced channel is a fading channel with a certain multipath delay, and the phase noise varying faster exists at a sending end and a receiving end, the reference signal sequence includes all reference signal sequences in each data block, and the length is 100. The modulation mode of the reference signal sequence and a modulation mode of a data sequence in the adjacent data block are the same and are both the $\pi/2$ BPSK modulation.

According to the length requirement, a group of GOLD sequences with a length of 127 is firstly generated, and a portion with a length of 100 is intercepted from the GOLD sequences so as to serve as bit sequences of a reference signal. A corresponding reference signal sequence is obtained according to the bit sequence and the $\pi/2$ BPSK modulation mode, so that modulation symbols whose position is at an odd number in the data block are located in a second quadrant and a fourth quadrant of the constellation diagram, and modulation symbols whose position is at an even number in the data block are located in a first quadrant and a third quadrant of the constellation diagram.

In an embodiment, FIG. 9 is a structural block diagram of a reference signal configuration apparatus according to an embodiment of the present application. This embodiment is applied to a reference signal configuration device. As shown in FIG. 9, this embodiment includes a first determination module 910 and a second determination module 920.

The first determination module 910 is configured to determine a modulation mode of a data sequence.

The second determination module 920 is configured to determine a modulation mode of a reference signal sequence according to the modulation mode of the data sequence, where a constellation diagram of the reference signal sequence is associated with a time domain position. In an embodiment, that the modulation mode of the reference signal sequence is determined according to the modulation mode of the data sequence includes one of: the modulation mode of the reference signal sequence is the same as the modulation mode of the data sequence; or the modulation mode of the reference signal sequence is different from the modulation mode of the data sequence.

In an embodiment, the time domain position includes one of a time domain position before oversampling or a time domain position before upsampling.

In an embodiment, one data block includes the reference signal sequence and the data sequence, and the data block satisfies a modulation rule of the data sequence.

In an embodiment, in one data block consisting of the reference signal sequence, the modulation mode of the reference signal sequence is the same as a modulation mode of a data sequence in a data block adjacent to the one data block.

In an embodiment, each data block includes head reference signal sequences and tail reference signal sequences, the head reference signal sequences within each data block are the same, and the tail reference signal sequences within each data block are the same.

In an embodiment, each data block includes intermediate reference signal sequences discretely distributed, and each of the intermediate reference signal sequences is the same or different.

In an embodiment, each data block includes head reference signal sequences, tail reference signal sequences, and intermediate reference signal sequences discretely distributed. The head reference signal sequences within each data block are the same, the tail reference signal sequences within each data block are the same, and each of the intermediate reference signal sequences within each data block is the same or different.

In an embodiment, the modulation mode of the data sequence and the modulation mode of the reference signal sequence include one of: a $\pi/2$ binary phase shift keying (BPSK) modulation mode, a $\pi/4$ BPSK modulation mode, a 1+D $\pi/2$ BPSK modulation mode, a quadrature phase shift keying (QPSK) modulation mode, a 8 phase shift keying (PSK) modulation mode, a 16 quadrature amplitude modulation (QAM) modulation mode, a 16 amplitude phase shift keying (APSK) modulation mode, a 64QAM modulation mode, or a 256QAM modulation mode, respectively.

In an embodiment, the $\pi/4$ BPSK modulation mode includes: an interpolation operation is performed between two adjacent modulation symbols on the basis of the $\pi/2$ BPSK modulation mode, where a phase of an interpolation is a mean value of phases of the two adjacent modulation symbols, and a modulus of the interpolation is the same as a modulus of $\pi/2$ BPSK modulation symbols.

In an embodiment, the 1+D $\pi/2$ BPSK modulation mode includes: a convolution operation is performed on time domain data and $[\sqrt{2}, \ \sqrt{2}]$ on the basis of the $\pi/2$ BPSK modulation mode to obtain the 1+D $\pi/2$ BPSK modulation mode.

In an embodiment, the convolution operation within each data block includes a circular convolution operation.

In an embodiment, a last interpolation of each data block is an interpolation result of a first symbol and a last symbol in the $\pi/2$ BPSK modulation symbols before the interpolation.

In an embodiment, the time domain position of the reference signal sequence within each data block satisfies following condition: modulation symbols whose position is at an odd number of the reference signal sequence within each data block being located in a second quadrant and a fourth quadrant of the constellation diagram, and modulation symbols whose position is at an even number of the reference signal sequence within each data block being located in a first quadrant and a third quadrant of the constellation diagram; and modulation symbols whose position is at an odd number of the reference signal sequence within each slot being located in the second quadrant and the fourth quadrant of the constellation diagram, and modulation symbols whose position is at an even number of the reference signal sequence within each slot being located in the first quadrant and the third quadrant of the constellation diagram.

In an embodiment, the reference signal sequence in each data block is determined in following manners: a bit sequence of a reference signal is generated from a pseudo-random sequence; and the corresponding reference signal sequence is determined according to the bit sequence of the reference signal, a time domain position of the reference signal sequence in one data block, and a modulation mode of the reference signal.

In an embodiment, the pseudo-random sequence includes one of a pseudo-noise (PN) sequence, a GOLD sequence or an m sequence.

In an embodiment, the reference signal sequence includes one of demodulation reference signal (DMRS) sequence, a phase tracking reference signal (PTRS) sequence, or a sounding reference signal (SRS) sequence.

The reference signal configuration apparatus provided in this embodiment is configured to implement the reference signal configuration method of the embodiment shown in FIG. 1. Implementation principles and technical effects of the reference signal configuration apparatus provided in this embodiment are similar to implementation principles and technical effects of the reference signal configuration method, and details are not described herein.

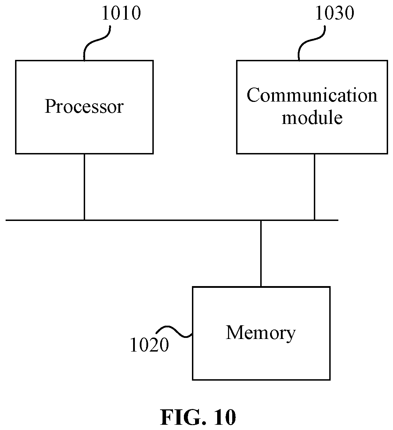

FIG. 10 is a schematic structural diagram of a reference signal configuration device according to an embodiment of the present application. As shown in FIG. 10, the reference signal configuration device provided in the present application includes a processor 1010, a memory 1020 and a communication module 1030. A number of processors 1010 in the device may be one or more, for example, one processor 1010 is used as an example in FIG. 10. A number of memories 1020 in the device may be one or more, for example, one memory 1020 is used as an example in FIG. 10. The processor 1010, the memory 1020, and the communication module 1030 of the device may be connected via a bus or otherwise, and they may be connected via a bus in FIG. 10. In this embodiment, the device may be a terminal side (such as, a user device).

The memory 1020, as a computer-readable storage medium, may be configured to store a software program, a computer-executable program, and a module, such as a program instruction/module corresponding to the device of any of the embodiments of the present application (such as, the first determination module 910 and the second determination module 920 in the reference signal configuration apparatus). The memory 1020 may include a storage program region and a storage data region. The storage program region may store an operating system, and an application program required for at least one function. The storage data region may store data and the like created according to the use of the device. Moreover, the memory 1020 may include a high speed random access memory, and may also include a non-volatile memory such as at least one magnetic disk storage device, a flash memory device, or other non-volatile solid state storage devices. In some instances, the memory 1020 may include a memory remotely disposed relative to the processor 1010, and the remote memory may be connected to the device over a network. Instances of such networks include, but are not limited to, an Internet, an intranet, a local area network, a mobile communication network, and combinations thereof.

The communication module 1030 is configured to perform a communication interaction between the transmitting end and the receiving end.

In a case where the reference signal configuration device is a user device or a base station, the device described above may be configured to perform the reference signal configuration method provided in any of the embodiments described above, and has corresponding functions and effects. An embodiment of the present application further provides a storage medium including a computer-executable instruction. The computer-executable instruction is configured to perform, when executed by a computer processor, the reference signal configuration method. This method includes that: a modulation mode of a data sequence is determined; a modulation mode of a reference signal sequence is determined according to the modulation mode of the data sequence, where a constellation diagram of the reference signal sequence is associated with a time domain position.

It should be understood by those skilled in the art that the term "user device" encompasses any suitable type of radio user device, such as a mobile phone, a portable data processing apparatus, a portable web browser, or an in-vehicle mobile station.

In general, various embodiments of the present application may be implemented in hardware or special purpose circuits, software, logic or any combination thereof. For example, some aspects may be implemented in hardware, while other aspects may be implemented in firmware or software which may be executed by a controller, microprocessor or other computing apparatus, although the present application is not limited thereto.

Embodiments of the present application may be implemented by a data processor of a mobile device executing computer program instructions, for example in a processor entity, or by hardware, or by a combination of software and hardware. The computer program instructions may be assembler instructions, instruction set architecture (ISA) instructions, machine instructions, machine-related instructions, microcode, firmware instructions, state setting data, or source or object codes written in any combination of one or more programming languages.

Any structural block diagram of the logic flow in the accompanying drawings of the present application may represent program steps, or may represent interconnected logic circuits, modules, and functions, or may represent a combination of program steps and logic circuits, modules, and functions. The computer program may be stored on the memory. The memory may be of any type suitable for the local technical environment and may be implemented using any suitable data storage technology, such as, but not limited to, a read-only memory (ROM), a random access memory (RAM), an optical memory device and system (digital versatile disc (DVD) or compact disk (CD)). Computer readable media may include non-instantaneous storage media. Data processors may be of any type suitable for the local technical environment, such as, but not limited to, general-purpose computers, specialized computers, microprocessors, digital signal processors (DSP), application specific integrated circuits (ASIC), field-programmable gate array (FPGA)), and processors based on multi-core processor architectures.

**Claims**

1.  A reference signal sequence configuration method, comprising:

    determining a modulation mode of a data sequence; and
    determining a modulation mode of a reference signal sequence according to the modulation mode of the data sequence, wherein a constellation diagram of the reference signal sequence is associated with a time domain position.

2.  The method of claim 1, wherein determining the modulation mode of the reference signal sequence according to the modulation mode of the data sequence comprises one of:

    the modulation mode of the reference signal sequence being the same as the modulation mode of the data sequence; or
    the modulation mode of the reference signal sequence being different from the modulation mode of the data sequence.

3.  The method of claim 1, wherein the time domain position comprises one of a time domain position before oversampling or a time domain position before upsampling.

4.  The method of claim 1, wherein one data block comprises the reference signal sequence and the data sequence, and the data block satisfies a modulation rule of the data sequence.

5.  The method of claim 1, wherein in one data block consisting of the reference signal sequence, the modulation mode of the reference signal sequence is the same as a modulation mode of a data sequence in a data block adjacent to the one data block.

6.  The method of claim 1, wherein each data block comprises head reference signal sequences and tail reference signal sequences, the head reference signal sequences within each data block are the same, and the tail reference signal sequences within each data block are the same.

7.  The method of claim 1, wherein each data block comprises intermediate reference signal sequences discretely distributed, and each of the intermediate reference signal sequences is the same or different.

8.  The method of claim 1, wherein each data block comprises head reference signal sequences, tail reference signal sequences, and intermediate reference signal sequences discretely distributed, wherein the head reference signal sequences within each data block are the same, the tail reference signal sequences within each data block are the same, and each of the intermediate reference signal sequences within each data block is the same or different.

9. The method of claim 1, wherein the modulation mode of the data sequence and the modulation mode of the reference signal sequence comprise one of: a $\pi/2$ binary phase shift keying (BPSK) modulation mode, a $\pi/4$ BPSK modulation mode, a 1+D $\pi/2$ BPSK modulation mode, a quadrature phase shift keying, QPSK, modulation mode, a 8 phase shift keying, PSK, modulation mode, a 16 quadrature amplitude modulation, QAM, modulation mode, a 16 amplitude phase shift keying, APSK, modulation mode, a 64QAM modulation mode, or a 256QAM modulation mode, respectively.

10. The method of claim 9, wherein the $\pi/4$ BPSK modulation mode comprises: performing an interpolation operation between two adjacent modulation symbols on the basis of the $\pi/2$ BPSK modulation mode, wherein a phase of an interpolation is a mean value of phases of the two adjacent modulation symbols, and a modulus of the interpolation is the same as a modulus of $\pi/2$ BPSK modulation symbols.

11. The method of claim 9, wherein the 1+D $\pi/2$ BPSK modulation mode comprises: performing a convolution operation on time domain data and $[\sqrt{2}, \sqrt{2}]$ on the basis of the $\pi/2$ BPSK modulation mode to obtain the 1+D $\pi/2$ BPSK modulation mode.

12. The method of claim 11, wherein the convolution operation within each data block comprises a circular convolution operation.

13. The method of claim 10 or 11, wherein a last interpolation of each data block is an interpolation result of a first symbol and a last symbol in the $\pi/2$ BPSK modulation symbols before the interpolation.

14. The method of claim 1, wherein the time domain position of the reference signal sequence within each data block satisfies following condition:

modulation symbols whose position is at an odd number of the reference signal sequence within each data block being located in a second quadrant and a fourth quadrant of the constellation diagram, and modulation symbols whose position is at an even number of the reference signal sequence within each data block being located in a first quadrant and a third quadrant of the constellation diagram; and
modulation symbols whose position is at an odd number of the reference signal sequence within each slot being located in the second quadrant and the fourth quadrant of the constellation diagram, and modulation symbols whose position is at an even number of the reference signal sequence within each slot being located in the first quadrant and the third quadrant of the constellation diagram.

15. The method of claim 1, wherein the reference signal sequence in each data block is determined in following manners:

generating a bit sequence of a reference signal from a pseudo-random sequence; and
determining the reference signal sequence according to the bit sequence of the reference signal, a time domain position of the reference signal sequence in one data block, and a modulation mode of the reference signal.

16. The method of claim 15, wherein the pseudo-random sequence comprises one of a pseudo-noise, PN, sequence, a GOLD sequence or an m sequence.

17. The method of claim 1, wherein the reference signal sequence comprises one of demodulation reference signal, DMRS, sequence, a phase tracking reference signal, PTRS, sequence, or a sounding reference signal, SRS, sequence.

18. A reference signal configuration device, comprising a communication module, a memory, and one or more processors, wherein,

the communication module is configured to perform a communication interaction between a transmitting end and a receiving end; and
the memory is configured to store one or more programs;
wherein the one or more programs, when executed by the one or more processors, cause the one or more processors to implement the method of any one of claims 1 to 17 described above.

19. A storage medium storing a computer program, wherein the computer program, when executed by a processor, implements the method of any one of claims 1 to 17 described above.

| Determine a modulation mode of a data sequence | S110 |

| Determine a modulation mode of a reference signal sequence according to the modulation mode of the data sequence | S120 |

**FIG. 1**

One data block

PTRS sequence
(head and tail)

Data
sequence

**FIG. 2**

One data block

PTRS sequence
(head and tail)

Data
sequence

Intermediate
PTRS sequence

**FIG. 3**

**FIG. 4**

**FIG. 5**

One data block

1+D π /4
BPSK

1+D

π /4 BPSK

Interpolation

π /2 BPSK

PTRS sequence
(head and tail)

Data
sequence

Intermediate
PTRS sequence

**FIG. 6**

One data block

PTRS sequence
(head and tail)

Data
sequence

Intermediate
PTRS sequence

**FIG. 7**

One data block

Reference signal
sequence

**FIG. 8**

**FIG. 9**

1010      1030

| Processor |

| Communication module |

| Memory |

1020

**FIG. 10**

## INTERNATIONAL SEARCH REPORT

| | International application No. |
|---|---|
| | **PCT/CN2022/111031** |

**A.    CLASSIFICATION OF SUBJECT MATTER**

H04L 5/00(2006.01)i;  H04L 27/26(2006.01)i

According to International Patent Classification (IPC) or to both national classification and IPC

**B.    FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 中兴, 参考信号, 导频, 相位跟踪参考信号, 相躁导频, 相位噪声导频, 序列, 调制, 方式, 模式, 数据块, 时域, 星座图, 峰均比, Reference Signal, RS, Phase Tracking Reference Signal, PTRS, modulation, block, PAPR

**C.    DOCUMENTS CONSIDERED TO BE RELEVANT**

| Category* | Citation of document, with indication, where appropriate, of the relevant passages | Relevant to claim No. |
|---|---|---|
| X | CN 112564878 A (ZTE CORP.) 26 March 2021 (2021-03-26)<br>description, paragraphs [0038]-[0071] and [0098]-[0106] | 1-19 |
| A | CN 111901277 A (ZTE CORP.) 06 November 2020 (2020-11-06)<br>entire document | 1-19 |
| A | ZTE et al. "Evaluation results for 52.6 to 71GHz"<br>*3GPP TSG-RAN WG1 Meeting #104-e R1-2101820*, 26 January 2021 (2021-01-26),<br>entire document | 1-19 |
| A | CN 109150480 A (HUAWEI TECHNOLOGIES CO., LTD.) 04 January 2019 (2019-01-04)<br>entire document | 1-19 |
| A | CN 110149288 A (VIVO COMMUNICATION TECHNOLOGY CO., LTD.) 20 August 2019<br>(2019-08-20)<br>entire document | 1-19 |
| A | US 2021067391 A1 (INTEL CORP.) 04 March 2021 (2021-03-04)<br>entire document | 1-19 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 September 2022** | **26 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/111031**

| Patent document cited in search report | | | Publication date (day/month/year) | Patent family member(s) | | | Publication date (day/month/year) |
|---|---|---|---|---|---|---|---|
| CN | 112564878 | A | 26 March 2021 | WO | 2022110973 | A1 | 02 June 2022 |
| CN | 111901277 | A | 06 November 2020 | WO | 2021259177 | A1 | 30 December 2021 |
| CN | 109150480 | A | 04 January 2019 | CA | 3049493 | A1 | 20 December 2018 |
| | | | | CN | 114285714 | A | 05 April 2022 |
| | | | | KR | 20190099073 | A | 23 August 2019 |
| | | | | BR | 112019018168 | A2 | 07 April 2020 |
| | | | | JP | 2020513171 | A | 30 April 2020 |
| | | | | US | 2020052944 | A1 | 13 February 2020 |
| | | | | EP | 3570508 | A1 | 20 November 2019 |
| | | | | US | 2022038320 | A1 | 03 February 2022 |
| | | | | WO | 2018228460 | A1 | 20 December 2018 |
| | | | | IN | 201947028100 | A | 20 December 2019 |
| | | | | VN | 67324 | A | 25 December 2019 |
| | | | | US | 11108605 | B2 | 31 August 2021 |
| | | | | KR | 102305414 | B1 | 28 September 2021 |
| | | | | EP | 3570508 | B1 | 20 October 2021 |
| | | | | JP | 6959347 | B2 | 02 November 2021 |
| | | | | EP | 3937446 | A1 | 12 January 2022 |
| | | | | EP | 3570508 | A4 | 01 April 2020 |
| CN | 110149288 | A | 20 August 2019 | CN | 110149288 | B | 24 August 2021 |
| US | 2021067391 | A1 | 04 March 2021 | None | | | |

Form PCT/ISA/210 (patent family annex) (January 2015)